# EUROPEAN PATENT APPLICATION

(11) **EP 1 657 857 A2**
(43) Date of publication of application: **17.05.2006**
(21) Application number: 05256919.1
(22) Date of filing: 09.11.2005
(51) Int. Cl.: H04L 12/28

(54) **Apparatus, system, and method for transmitting content in home network**

(30) Priority: 16.11.2004 KR 2004093583
(71) Applicant: Samsung Electronics Co., Ltd., Suwon-si, Gyeonggi-Do (KR)
(72) Inventor: Han, Hee-chul 108-103 Neulpureun Byucksan Apt., Gyeonggi-do (JP); Hur, Se-huhn 503-1304 Samaung 5-cha Apt., Gyeonggi-do (JP)
(74) Representative: Waddington, Richard

(57) **Abstract**

An apparatus, system, and method for transmitting content in a home network is provided in which predetermined content is recorded according to preprogrammed recording information set by a user. The content is transcoded and encrypted using a content storage device (100) and then encrypted and transmitted to a user selected mobile device (200). The apparatus includes a receiving unit (110), a recording setting unit (120), a transcoding unit (140), an encrypting/authenticating unit, and a control unit (170). The receiving unit (110) receives content. The recording setting unit (120) allows a user to set preprogrammed recording information and then records the received content according to the information. The transcoding unit (140) transcodes the recorded content. The encrypting/authenticating unit encrypts the transcoded content and performs authentication with respect to the predetermined mobile device (200). The control unit (170) controls the received content, the recorded content to be transcoded, and checks the predetermined mobile device (200) selected when the user sets preprogrammed recording.

## Description

Apparatuses, systems, and methods consistent with the present invention relate to transmitting content in a home network, and more particularly, to transmitting content in a home network, in which predetermined content is recorded according to recording settings of a preprogrammed recording set by a user and transcoded using a content storage device, and the transcoded content is transmitted to a user selected mobile device after being encrypted.

In general, a home network is configured using an Internet Protocol (IP) based private network. Thus, various kinds of equipment used in the home, including all types of personal computers (PCs), intelligent appliances and wireless devices, are connected to one another and controlled through a single network.

With the development of communication and network technologies, the home network environment has recently been evolving from a wired network environment using a cable medium such as a coaxial cable or an optical cable into a wireless network environment using radio signals in various frequency bands.

However, unlike in a wired network, a data transmission path in a wireless network is not physically fixed. Therefore, communication security is more vulnerable to security breaches than in the wired network.

In other words, when there are devices in different wireless network environments, an external device in an external network may bug data transmitted between devices in a particular network.

For more secure wireless communication, data encryption and device authentication should be performed to strengthen the security of wireless communication.

In addition, for data transcoding to download or stream data stored in a storage device such as a digital video recorder (DVR) or a digital versatile disc (DVD) in a home network onto a desired mobile device, a personal computer (PC) should transform the data into a format suitable for the mobile device using a specific program and the data should be transmitted to the mobile device using the Universal Serial Bus (USB) or IEEE 1394 interface.

However, it is a burden for a user to transform data stored in a storage device into a format suitable for a specific mobile device, and the storage device should have a connection port to transmit the transformed data to the mobile device.

Japanese Patent Publication No. 2002-185900 discloses a television broadcast recording and reproducing distribution system in which upon a video recording (reservation) request from a mobile phone, a reproducing distribution station records a desired program and transmits the recorded program to the mobile phone. However, since content is not encrypted and authentication is not performed with respect to a device receiving the content, a non-authenticated user may receive and use the content.

The present invention provides an apparatus, system, and method for transmitting content in a home network, in which after recording and transcoding predetermined content, a content storage device transmits the transcoded content to a mobile device selected by a user.

The present invention also provides an apparatus, system, and method for transmitting content in a home network, in which content is encrypted and authentication is performed with respect to a mobile device, thereby protecting content and allowing only an authenticated device to use content.

According to the present invention there is provided an apparatus and method as set forth in the appended claims. Preferred features of the invention will be apparent from the dependent claims, and the description which follows.

According to an aspect of the present invention, there is provided an apparatus for transmitting content in a home network. The apparatus includes a receiving unit, a recording setting unit, a transcoding unit, an encrypting/authenticating unit, and a control unit. The receiving unit is operable to receive content transmitted from a broadcasting station. The recording setting unit is operable to allow a user to set a preprogrammed recording and to record the received content according to the preprogrammed recording. The transcoding unit is operable to transcode the recorded content to make it suitable for a predetermined mobile device. The encrypting/authenticating unit is operable to encrypt the transcoded content and to perform authentication with respect to the predetermined mobile device. The control unit is operable to control the apparatus to record the received content according to the preset recording time set by the user and to control the apparatus to transcode the recorded content to make it suitable for a predetermined mobile device by checking the predetermined mobile device selected when the user sets the preprogrammed recording.

According to another aspect of the present invention, there is provided a system for transmitting content in a home network, the system including a content storage device which records and stores content transmitted from a broadcasting station, transcodes the stored content, and encrypts and then transmits the transcoded content, and a mobile device which receives and then reproduces the content transmitted from the content storage device.

According to still another aspect of the present invention, there is provided a method for transmitting content in a home network, the method including upon receipt of content from a broadcasting station, recording and storing the received content according to preprogrammed recording information set by a user, performing authentication with respect to a predetermined mobile device to which the recorded content is to be transmitted, transcoding the stored content to make it suitable for the predetermined mobile device, encrypting the transcoded content, and transmitting the encrypted content to the predetermined mobile device.

For a better understanding of the invention, and to show how embodiments of the same may be carried into effect, reference will now be made, by way of example, to the accompanying diagrammatic drawings in which:
FIG. 1 illustrates a system for transmitting content in a home network, according to an exemplary embodiment of the present invention;
FIG. 2 is a block diagram of a content storage device in a system for transmitting content in a home network, according to an exemplary embodiment of the present invention;
FIG. 3 is a flowchart illustrating a method for transmitting content in a home network, according to an exemplary embodiment of the present invention; and
FIG. 4 is a flowchart illustrating a process of reserving the recording of content in a method for transmitting content in a home network, according to an exemplary embodiment of the present invention.

Advantages and features of the present invention and methods of accomplishing the same may be understood more readily by reference to the following detailed description of exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

The present invention is described hereinafter with reference to flowchart illustrations of methods according to embodiments of the invention.

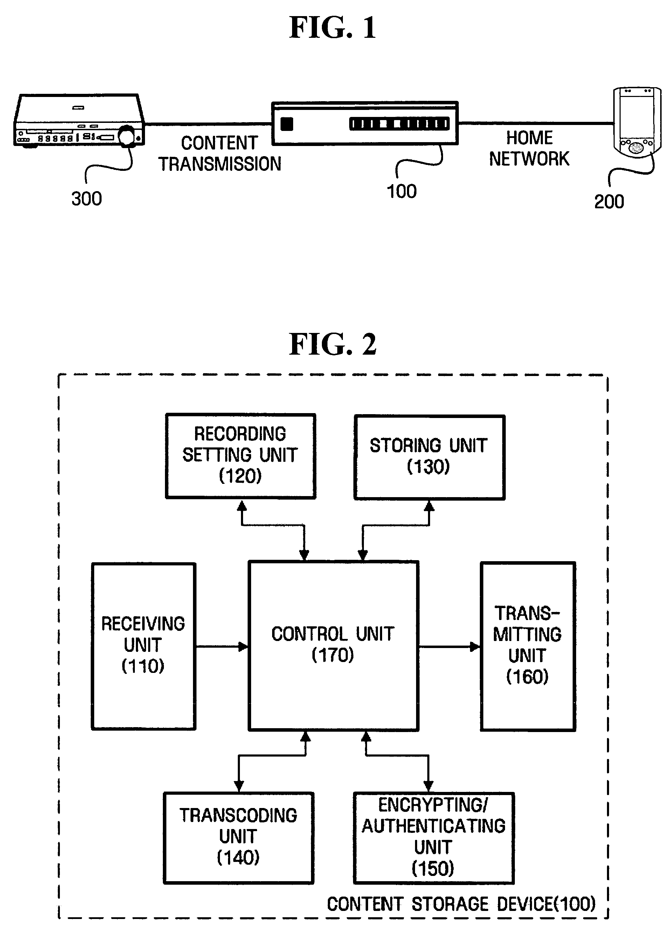

FIG. 1 illustrates a system for transmitting content in a home network, according to an exemplary embodiment of the present invention.

Referring to FIG. 1, a system for transmitting content in a home network includes a content storage device 100, a mobile device 200 selected by a user, and a set-top box 300. The content may be any multimedia data including, but not limited to, video, audio, and images.

The content storage device 100 records and stores content transmitted from the set-top box 300 at a recording time preset by a user, transcodes the stored content to be reproduced in the mobile device 200 selected by the user, encrypts the transcoded content, and then transmits the transcoded and encrypted content to the mobile device 200.

Here, the content storage device 100 may be a digital video recorder (DVR), a digital versatile disc (DVD), or other similar device.

Encryption of content is performed to protect the content. The encryption may use a Wi-Fi protected access pre-shared key (WPA-PSK) method used in a wireless local area network (LAN), a wired equivalent privacy (WEP) method, an advanced encryption standard-counter mode/CBC-MAC protocol (AES-CCMP) method, or other method known in the art.

In further detail, in a process of setting an encryption key using the WPA-PSK method, the content storage device 100 and the mobile device 200, constituting a wireless network using the WPA-PSK method, share a pre-shared key (hereinafter, referred to as an initial key). The initial key is used to create an encryption key for protecting communication between the content storage device 100 and the mobile device 200.

The content storage device 100 and the mobile deice 200 undergo a predetermined authentication and connection processes. For such authentication and connection, an open authentication of the Institute of Electrical and Electronics Engineers (IEEE) 802.11 may be used.

After authentication and connection, the content storage device 100 creates a predetermined random number (a first random number) and the mobile device 200 also creates a random number (a second random number).

Thereafter, the content storage device 100 and the mobile device 200 exchange their created random numbers. At this time, the content storage device 100 and the mobile device 200 may share the two random numbers, i.e., the first random number and the second random number, a medium access control (MAC) address of the content storage device 100, and an MAC address of the mobile device 200.

The content storage device 100 and the mobile device 200 create encryption keys according to the same algorithm using the shared information, i.e., the random numbers and the MAC addresses, and the initial key.

Since the same information, i.e., the random numbers and the MAC addresses, and the same algorithm are used to create the encryption keys, the content storage device 100 and the mobile device 200 can share the same encryption key.

The content storage device 100 performs authentication with respect to the mobile device 200 selected by a user. Here, an authentication method may be an open system using a service set identifier (SSID) and an MAC address.

In further detail, in the authentication with respect to the mobile device 200 using an SSID, the SSID is a string for identifying a service set, and devices in the same wireless network (i.e., the content storage device 100 and the mobile device 200) use the same SSID.

Thus, the content storage device 100 requests an SSID of the mobile device 200 before transmitting the transcoded content and checks if the SSID of the mobile device 200 is the same as its own SSID, thereby performing authentication with respect to the mobile device 200.

The content storage device 100 transcodes encrypted content. Here, the transcoding may be understood as the conversion of the resolution, frame rate, and display quality of content.

In other words, the content storage device 100 adjusts the size of content to be transmitted to the mobile device 200 to be suitable for reproduction in the mobile device 200.

The mobile device 200 receives and reproduces the content transmitted from the content storage device 100. The mobile device 200 may be any portable wireless device such as a cellular phone, a personal digital assistant (PDA), or other similar device.

The mobile device 200 may receive and store the content transmitted from the content storage device 100 through streaming or downloading.

The set-top box 300 receives broadcast content transmitted from a broadcasting station and transmits the received broadcast content to the content storage device 100.
In other words, the set-top box 300 tunes a signal transmitted from the broadcasting station to a frequency in a predetermined band, outputs the tuned signal, separates the tuned signal into audio data, video data, and image data by demultiplexing the tuned signal, and outputs them. The set-top box 300 then decodes the audio data, the video data, and the image data and transmits them to the content storage device 100.

FIG. 2 is a block diagram of the content storage device 100 in a system for transmitting content in a home network according to an exemplary embodiment of the present invention.

Referring to FIG. 2, the content storage device 100 includes a receiving unit 110, a recording setting unit 120, a storing unit 130, a transcoding unit 140, an encrypting/authenticating unit 150, a transmitting unit 160, and a control unit 170.

The receiving unit 110 receives content transmitted from the set-top box 300.

The recording setting unit 120 sets preprogrammed recording information entered by a user and uses the preprogrammed recording information to record the received content.

For example, when the user desires to record a predetermined program through a recording setting screen, the user sets a preprogrammed recording by inputting information about the predetermined program, such as the name of the program, a broadcast channel, reservation start time, and reservation ending time, and selecting and inputting the mobile device 200 to which the recording-reserved program is to be transmitted.

Thus, the recording setting unit 120 records content of the predetermined program in the storing unit 130 according to the set preprogrammed recording information.

The storing unit 130 stores the recorded content and the preprogrammed recording information set by the user.

The transcoding unit 140 transcodes the stored content to make it suitable for the mobile device 200 selected by the user. Here, the transcoding may be understood as the conversion of the resolution, frame rate, and display quality of content.

In other words, the transcoding unit 140 of the content storage device 100 adjusts the size of content to be transmitted to the mobile device 200 to be suitable for reproduction in the mobile device 200.

The encrypting/authenticating unit 150 encrypts the transcoded content and performs authentication with respect to the mobile device 200. Here, the encryption may be performed using a Wi-Fi protected access pre-shared key (WPA-PSK) method, a WEP method, an AES-CCMP method, or other method known in the art. For a mobile device 200 using an SSID, the SSID is a string for identifying a service set, and devices in the same wireless network (i.e., the content storage device 100 and the mobile device 200) use the same SSID. Thus, the encrypting/authenticating unit 150 of the content storage device 100 requests an SSID of the mobile device 200 before transmitting the transcoded content and checks if the SSID of the mobile device 200 is the same as its own SSID, thereby performing authentication with respect to the mobile device 200.

The encrypting/authenticating unit 150 encrypts the transcoded content and performs authentication with respect to the mobile device 200 that is to receive the content, thereby protecting content and allowing only an authenticated device to reproduce the content.

Thus, when mobile devices in another network receive content, they cannot use the content because the content is encrypted. Furthermore, when a mobile device that is to receive content is not authenticated, the content is not transmitted to the mobile device.

The transmitting unit 160 transmits the encrypted content to the mobile device 200. Here, the transmitting unit 160 transmits the encrypted content through streaming or downloading.

Upon reception of the content transmitted from the set-top box 300 through the receiving unit 110, the control unit 170 controls the recording setting unit 120 to record content according to the preprogrammed recording information set by the user and checks the mobile device 200 selected by the user when the user sets the preprogrammed recording. The control unit 170 controls the transcoding unit 140 to transcode the content to make it suitable for the mobile device 200 selected by the user.

The control unit 170 controls the encrypting/authenticating unit 150 to encrypt the transcoded content and perform authentication with respect to the mobile device 200 selected by the user. The control unit 170 also controls the transmitting unit 160 to transmit the encrypted content to the mobile device 200.

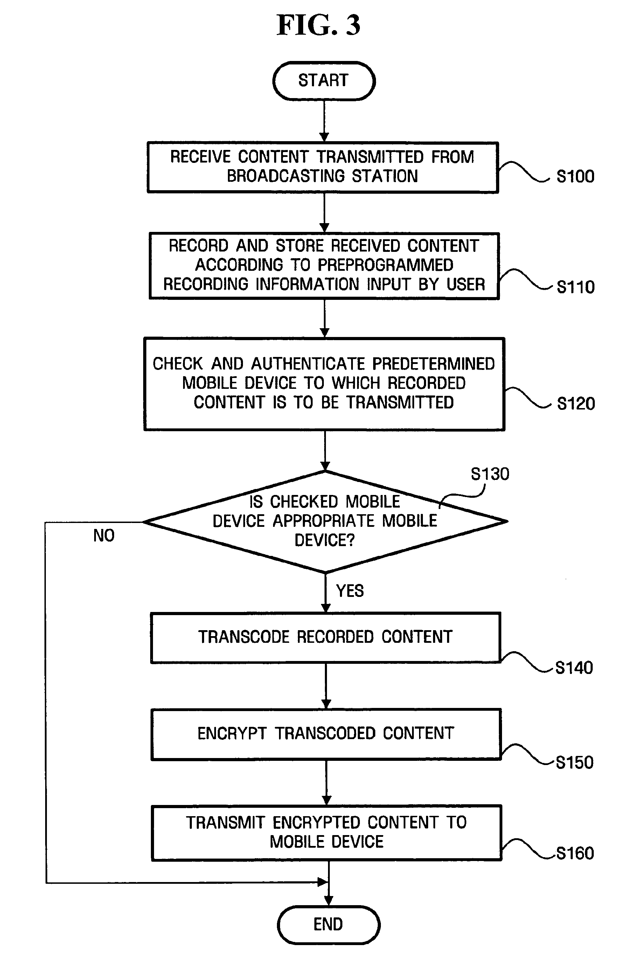

FIG. 3 shows a flowchart illustrating a method for transmitting content in a home network according to an exemplary embodiment of the present invention.

Once a broadcast signal is transmitted from a broadcasting station, the set-top box 300 receives the transmitted broadcast signal at operation S100. After the signal received by the set-top box 300 is decrypted, the decrypted content is transmitted to the content storage device 100. Here, the content may be understood as any multimedia data including, but not limited to, video, audio, and images.

The receiving unit 110 of the content storage device 100 receives predetermined content transmitted from the set-top box 300 in operation S100 and transmits the received content to the control unit 170.

The control unit 170 transmits a request for recording content to the recording setting unit 120 and the recording setting unit 120 records the content according to preprogrammed recording information set by the user in operation S110.

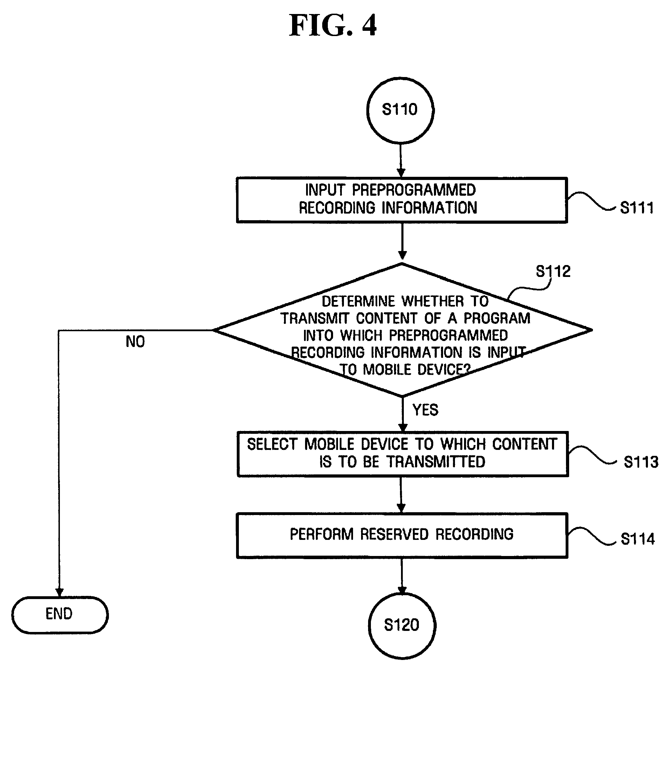

Here, a process in which a user inputs the preprogrammed recording information and a process of recording content will be described with reference to FIG. 4

First, a user inputs information about a predetermined program, such as the name of the predetermined program, a broadcast channel, reservation start time, and reservation ending time, through a recording setting screen in operation S111.

Next, the user selects whether to transmit to the mobile device 200 content of the program into which preprogrammed recording information is input in operation S112.

The user selects the mobile device 200 to which the content is to be transmitted in operation S113.

Then, in operation S114, preprogrammed recording information, i.e., the information about the program and information about the selected mobile device 200, input by the user, is stored in the storing unit 130 and reserved recording of the content is performed through the recording setting unit 120.

If the user does not select the mobile device 200 to which content about the program into which preprogrammed recording information is input is to be transmitted in operation S113, recording of the content is terminated.

Once the content is recorded and stored according to the preprogrammed recording information set by the user in operation S110, the control unit 170 transmits a request for the information of the mobile device 200 that was selected by the user to the storing unit 130 to check the selected mobile device 200.

The control unit 170 transmits a request for authentication with respect to the checked mobile device 200 to the encrypting/authenticating unit 150 in operation S120.

By checking if the mobile device 200 selected by the user is an appropriate mobile device that exists in the same network and is authenticated, content is prevented from being transmitted to a non-authorized mobile device in another network and only an authorized mobile device is allowed to use the content.

As a result of the authentication with respect to the mobile device 200, if the mobile device 200 is an appropriate mobile device that exists in the same network and is authenticated, the control unit 170 transmits a request for transcoding the recorded content to the transcoding unit 140.

Thus, the transcoding unit 140 transcodes the recorded content to make it suitable for reproduction in the mobile device 200 in operation S140. Here, the transcoding may be understood as the conversion of the resolution, frame rate, and display quality of content.

By adjusting the resolution, frame rate, and display quality of the content to fit in the screen size of the mobile device 200 through the transcoding, the content can be reproduced with the optimal display quality in the mobile device 200.

Next, the control unit 170 transmits a request for encrypting the transcoded content to the encrypting/authenticating unit 150. The encrypting/authenticating unit 150 encrypts the transcoded content in operation S150. Here, the encryption may be understood as using a Wi-Fi protected access pre-shared key (WPA-PSK) method, a WEP method, an AES-CCMP method, or other method known in the art.

By encrypting the transcoded content, the encrypting/authenticating unit 150 allows only the mobile device 200 having an encryption key capable of decrypting the encrypted content to reproduce the content, thereby protecting the recorded content.

Next, the control unit 170 transmits the encrypted content to the mobile device 200 selected by the user through the transmitting unit 160 in operation S160.

Thus, after decrypting the encrypted content using the encryption key capable of decrypting the encrypted content, the mobile device 200 can reproduce the decrypted content.

Therefore, the user can receive the content transcoded to fit in the screen size of the mobile device 200 and view the recorded content anywhere.

Hereinafter, an exemplary implementation of the present invention will be described. Here, reserved recording of Park Chanho's baseball game starting at 3:00 am will be used as an example. In addition, the content storage device 100 is assumed to be a DVR and the mobile device 200 is assumed to be a PDA.

First, a user inputs information about a program called "Park Chanho's baseball game" (the name of the program, a broadcast channel, reservation start time, and reservation ending time), and a mobile device (a PDA) to which content about the program is to be transmitted using a recording setting screen.

Upon receipt of a broadcast signal of the program "Park Chanho's baseball game" from a broadcasting station, the content is recorded through a DVR according to the preprogrammed recording information set by the user.

Next, the mobile device (i.e., the PDA) selected by the user is checked and authenticated. As a result of the authentication, if the selected mobile device is an appropriate mobile device that exists in a home network and is authenticated, the content is transcoded to make it suitable for reproduction in the PDA.

After the transcoded content is encrypted to prevent the transcoded content from being used by a non-authenticated mobile device, the encrypted content is transmitted to the PDA selected by the user.

The PDA then receives the encrypted content and decrypts the encrypted content using an encryption key, thereby reproducing the "Park Chanho's baseball game" program.

Thus, a user records content of a predetermined program and then the recorded content is set to be transmitted to a specific mobile device, i.e., a PDA, thereby allowing the user to view the recorded content anywhere.

As described above, according to an exemplary embodiment of the present invention, an apparatus for transmitting content in a home network may provide the following advantages.

First, after storing and then transcoding predetermined content, a content storage device transmits the transcoded content to a mobile device selected by a user, thereby allowing the user to view the transmitted content anywhere.

Second, encryption of the content and authentication with respect to a mobile device are performed to protect the content and allow only an authorized device to use the content, thereby preventing the content transmitted to a mobile device from being illegally copied and then used.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for transmitting content in a home network, the apparatus comprising:
a receiving unit (110) which is operable to receive content transmitted from a broadcasting station;
a recording setting unit (120) which is operable to allow a preprogrammed recording to be set and to record the content according to the preprogrammed recording;
a transcoding unit (140) which is operable to transcode the content to make it suitable for a mobile device;
an encrypting and authenticating unit (150) which is operable to encrypt the content and to perform authentication with respect to the mobile device; and
a control unit (170) which is operable to control the content to be recorded according to the preprogrammed recording and controls the content to be transcoded to make it suitable for the mobile device by checking the mobile device selected when the preprogrammed recording is set.

2. The apparatus of claim 1, further comprising a storing unit (130) which is operable to store preprogrammed recording information which is set and the content which is recorded.

3. The apparatus of claim 1 or claim 2, wherein the transcoding comprises one of resolution conversion, frame rate conversion, and display quality conversion with respect to the content.

4. A system for transmitting content in a home network, the system comprising:
a content storage device (100) which is operable to record content transmitted from a broadcasting station, to transcode the content, and to encrypts and transmit the content; and
a mobile device (200) which is operable to receive and reproduce the content transmitted from the content storage device (100).

5. The system of claim 4, wherein the content storage device (100) comprises:
a receiving unit (110) which is operable to receive content transmitted from the broadcasting station;
a recording setting unit (120) which is operable to allow a preprogrammed recording to be set and to record the content according to the preprogrammed recording;
a transcoding unit (140) which is operable to transcode the content to make it suitable for the mobile device (200);
an encrypting and authenticating unit (150) which is operable to encrypt the content and to perform authentication with respect to the mobile device (200); and
a control unit (170) which is operable to control the content to be recorded according to the preprogrammed recording and to control the content to be transcoded to make it suitable for the mobile device (200) by checking the mobile device (200) selected when the preprogrammed recording is set.

6. The system of claim 4 or claim 5, further comprising a set-top box which is operable to receive the content transmitted by the broadcasting station, and to transmit the content to the content storage device (100).

7. A method for transmitting content in a home network, the method comprising:
upon receipt of content from a broadcasting station, recording the content according to preprogrammed recording information;
performing authentication with respect to a mobile device (200) to which the content is to be transmitted;
transcoding the content to make it suitable for the mobile device (200);
encrypting the content; and
transmitting the content to the mobile device (200).

8. The method of claim 7, wherein the recording the content comprises selecting the mobile device (200) to which the content is to be transmitted when the preprogrammed recording is set.

9. The method of claim 7 or claim 8, wherein the transcoding the content comprises performing one of resolution conversion, frame conversion, and display quality conversion with respect to the content.
